# EUROPÄISCHE PATENTSCHRIFT

(11) **EP 1 050 951 B1**
(45) Veröffentlichungstag und Bekanntmachung des Hinweises auf die Patenterteilung: **05.08.2015**
(21) Anmeldenummer: 00108178.5
(22) Anmeldetag: 13.04.2000
(51) Int. Cl.: H02M 3/158

(54) **Schaltungsanordnung für eine getaktete Stromversorgung**
Circuit arrangement for clocked power supply
Arrangement d'un circuit d'alimentation à découpage

(30) Priorität: 14.04.1999 DE 19916914
(43) Veröffentlichungstag der Anmeldung: 08.11.2000
(73) Patentinhaber: Infineon Technologies AG, 85579 Neubiberg (DE)
(72) Erfinder: Feldtkeller, Martin, 81543 München (DE)
(74) Vertreter: Westphal, Mussgnug & Partner Patentanwälte mbB

(56) Entgegenhaltungen:
- EP-A- 0 581 016
- EP-A- 1 028 528
- DE-A- 3 823 922
- US-A- 5 483 188
- US-A- 5 825 163
- PATENT ABSTRACTS OF JAPAN vol. 1998, no. 02, 30. Januar 1998 (1998-01-30) & JP 09 285120 A (OKI ELECTRONIC ), 31. Oktober 1997 (1997-10-31)
- PATENT ABSTRACTS OF JAPAN vol. 1996, no. 10, 31. Oktober 1996 (1996-10-31) & JP 08 149804 A (CANNON INC.), 7. Juni 1996 (1996-06-07)
- PATENT ABSTRACTS OF JAPAN vol. 003, no. 086 (E-125), 24. Juli 1979 (1979-07-24) & JP 54 065351 A (TOSHIBA), 25. Mai 1979 (1979-05-25)

## Beschreibung

Die Erfindung betrifft eine Schaltungsanordnung für eine getaktete Stromversorgung mit einem integrierten Schaltkreis, der mit einem ersten und einem zweiten Versorgungspotentialanschluß verbunden ist und der eine Schaltvorrichtung, eine die Schaltvorrichtung steuernde Ansteuerschaltung und eine Diode aufweist. Ferner ist eine Spule vorgesehen, die mit der Schaltvorrichtung und einer ersten Ausgangsklemme verbunden ist. Zwischen der ersten und einer zweiten Ausgangsklemme ist eine Last verschalten, der ein Ladungsspeicher parallel geschalten ist.

Schaltungsanordnungen für getaktete Schaltregler sind in den unterschiedlichsten Ausführungsformen bekannt. So wird beispielsweise in dem Buch von U. Tietze, Ch. Schenk: "Halbleiterschaltungstechnik", 10. Auflage, 1993, Springer-Verlag, auf den Seiten 561 bis 576 die prinzipielle Wirkungsweise und der Aufbau von sekundär getakteten Schaltreglern und primär getakteten Schaltreglern erläutert. Zu den sekundär getakteten Schaltreglern gehören neben den Abwärtswandlern und Aufwärtswandlern auch die invertierenden Wandler. Der Vorteil dieser Schaltregler liegt darin, daß kein separater Übertrager, sondern lediglich eine Speicherdrossel notwendig ist. Im einfachsten Fall bestehen sekundär getaktete Schaltregler lediglich aus drei Bauteilen, nämlich dem Schalttransistor, der erwähnten Speicherdrossel und einem Glättungskondensator. Der Schalttransistor ist hierbei als Wechselschalter ausgebildet. Der Wechselschalter läßt sich jedoch vermeiden, indem bei einem Abwärtswandler ein Zweig z. B. mit einem einfachen Ausschalter realisiert und der andere Zweig mit einer Diode versehen wird.

Es sind mittlerweile eine Vielzahl von integrierten Schaltkreisen bekannt, mit denen solche Schaltregler realisiert werden können. In dem genannten Buch ist auf Seite 567 beispielsweise der integrierte Baustein L296 von SGS beschrieben, der intern die Serienschaltung eines Bipolartransistors und einer Freilaufdiode sowie einer Ansteuerschaltung zum ein- und ausschalten des Schalttransistors aufweist.

Abwärtswandler, auch als Tiefsetzregler bezeichnet, werden vor allem dort eingesetzt, wo mit einem hohen Wirkungsgrad aus einer hohen Versorgungsspannung eine niedrigere erzeugt werden soll. Ein hoher Wirkungsgrad ist vor allem bei batteriebetriebenen Geräten gefordert. Neben der Erzielung eines hohen Wirkungsgrades steht die Erwärmung der elektronischen Bauelemente durch Verlustleistung im Vordergrund. Dies ist insbesondere bei Anwendungen der Automobilelektronik der Fall. Trotz eines hohen Wirkungsgrades sind getaktete Stromversorgungen in der Automobilelektronik aufgrund der elektromagnetischen Verträglichkeit bisher nicht zum Einsatz gekommen. Statt dessen wurden zur Erzeugung einer geregelten Versorgungsspannung Linearregler verwendet, die sich jedoch im Betrieb stark erwärmen.

Linearregler werden in der Automobilelektronik üblicherweise mit einem Nennstrom von 400 mA betrieben. An einem lateralen Bipolartransistor fällt die Differenz zwischen der Eingangs- und der Ausgangsspannung ab. Das Produkt aus der Differenzspannung und dem Nennstrom wird in Verlustwärme umgewandelt. Je größer die Spannungsdifferenz zwischen dem Eingang und dem Ausgang des Bipolartransistors ist, desto höher werden die Verluste. Der Einsatz eines Linearreglers in einem 42 Volt-Bordnetz sind aufgrund der stark ansteigenden Verlustleistung deshalb ungeeignet. Der Einsatz eines Schaltreglers für Lastströme um ca. 1 A ist deshalb wünschenswert.

Aus Gründen der elektromagnetischen Verträglichkeit (EMV) ist auf den Einsatz von Schaltreglern in der Automobilbranche bisher verzichtet worden. Eine Möglichkeit, eine geringe EMV-Abstrahlung zu realisieren, bestünde darin, die Taktfrequenz der Stromversorgung sehr niedrig, d. h. im Bereich zwischen 10 und 40 kHz, zu wählen und den Schalttransistor langsam zu schalten. Hierdurch könnte die durch die Schaltverluste erzeugte Verlustleistung begrenzt werden. Andererseits wird dann jedoch die Verwendung von großen Speicherdrosseln und Glättungskondensatoren bedingt, die jeweils viel Platz beanspruchen und teuer sind.

Eine Lösungsmöglichkeit bestünde deshalb in der Verwendung von Resonanzwandlern, die mit zusätzlichen Schwingkreiselementen (Spulen und Kondensatoren) sowie Dioden einen annähernd sinusförmigen Spannungs- und Stromverlauf ermöglichen. Resonanzwandler belasten jedoch die beteiligten Bauelemente mit höheren Strömen oder Spannungen und erfordern zudem eine wesentlich höhere Anzahl an Bauelementen. Ferner ist der Regelbereich bezüglich Lastschwankungen und Eingangsspannungsschwankungen nur begrenzt.

In der Veröffentlichung EP 5 81 016 A1 ist eine Vorrichtung bzw. ein Verfahren zum Aufteilen von Schaltverlusten paralleler MOSFET-Schalter beschrieben. Eine Verbesserung der elektromagnetischen Verträglichkeit ist mit dem dort beschriebenen Verfahren jedoch nicht zu erreichen.

Die Veröffentlichung US 5,825,163 betrifft einen DC-DC-Converter mit niedriger Eingangsspannung.

Die Veröffentlichung JP 09-285120 betrifft ebenfalls eine Schaltung mit zwei parallel geschalteten Transistoren zur Steuerung der Verlustleistung in den einzelnen Transistoren.

Die Aufgabe der vorliegenden Erfindung besteht deshalb darin, eine Schaltungsanordnung für eine getaktete Stromversorgung vorzusehen, die einerseits die Anforderungen an die elektromagnetische Verträglichkeit erfüllt und andererseits nur eine geringe Verlustleistung erzeugt.

Diese Aufgabe wird mit einer Schaltungsanordnung gemäß den Merkmalen des Patentanspruchs 1 erfüllt, wobei die Schaltvorrichtung einen ersten und einen zweiten Halbleiterschalter aufweist. Hierdurch ist es möglich, auch bei hohen Taktfrequenzen langsame Schaltflanken zu erzeugen, wodurch die Erwärmung der Halbleiterschalter gering bleibt.

Eine wesentliche Erkenntnis der Erfindung besteht darin, daß die elektromagnetische Abstrahlung überwiegend durch kurze Stromanstiegszeiten der Schaltvorgänge verursacht wird, während steile Spannungsanstiege bei konstantem Strom für die elektromagnetische Verträglichkeit von eher untergeordneter Bedeutung sind. Gängige getaktete Stromversorgungen erzeugen jedoch langsame Spannungsflanken und schnelle Stromübergänge, wodurch die Anforderung an die EMV nicht erfüllt werden können. Die Erzeugung eines langsamen Stromüberganges und einer vergleichsweise schnellen Spannungsflanke wird mit der Schaltvorrichtung ermöglicht, die einen ersten und einen zweiten Halbleiterschalter aufweist.

Bevorzugte Ausgestaltungen sind in den Unteransprüchen beschrieben.

Vorteilhafterweise sind der erste und der zweite Halbleiterschalter mit ihren Laststrecken parallel geschalten und werden jeweils von der Ansteuerung getrennt angesteuert. Die Halbleiterschalter sind vorteilhafterweise derart beschaffen, daß bei gleicher Einsatzspannung der erste Halbleiterschalter im Vergleich zu dem zweiten Halbleiterschalter einen größeren Strom tragen kann.

Somit weist der erste Halbleiterschalter einen niedrigen Einschaltwiderstand auf, der in Verbindung mit seiner Gate-Drain-Kapazität eine ausreichend hohe Steilheit der Spannungsflanken gewährleistet. Der zweite Halbleiterschalter ist so dimensioniert, daß sein Drain-Sättigungsstrom gerade ausreicht, den gesamten Laststrom zu übernehmen. Zum Einschalten wird die Gate-Source-Spannung mit einer definierten Flankensteilheit von einem Wert unterhalb der Einsatzspannung langsam auf seinen Maximalwert erhöht. Zum Ausschalten wird die Gate-Source-Spannung mit einer vergleichbaren Flankensteilheit wieder vermindert. Die gewünschte, langsame Flankensteilheit des Stromes läßt sich an dem zweiten Halbleiterschalter, der eine kleine Fläche und somit eine kleine Eingangskapazität aufweist, sehr leicht einstellen. Hierdurch ergibt sich die geforderte kleine Stromanstiegsgeschwindigkeit und somit ein geringe EMV-Abstrahlung.

Durch das Vorsehen zweier Halbleiterschalter in der Schaltvorrichtung wird es somit vorteilhaft ermöglicht, daß die Stromanstiegsgeschwindigkeit und die Spannungsanstiegsgeschwindigkeit voneinander unabhängig wählbar sind.

Die Ansteuerung der beiden Halbleiterschalter erfolgt vorteilhafterweise derart, daß der zweite Halbleiterschalter vor dem ersten Halbleiterschalter eingeschaltet wird. Weiterhin ist es vorteilhaft, wenn der zweite Halbleiterschalter nach dem ersten Halbleiterschalter ausgeschaltet wird. Dies hat zur Folge, daß der Laststrom im wesentlichen immer über einen einzigen Halbleiterschalter fließt. Nur für eine kurze Zeit der Schaltvorgänge findet eine Aufteilung des Laststroms statt, die den Stromanstieg - abhängig vom zeitlichen Übergang des Stromes von dem ersten auf den zweiten HalbleiterSchalter - kurz vor dem Erreichen des Nennstromes vergrößern kann. Zu diesem Zeitpunkt ist die EMV-Abstrahlung jedoch nicht mehr kritisch.

In einer bevorzugten Ausgestaltung der Erfindung ist der Laststrecke des ersten Halbleiterschalters eine Serienschaltung aus einem ersten Widerstand und der Laststrecke des zweiten Halbleiterschalters parallel geschalten. Der erste Widerstand ist dabei bevorzugt als diskretes Bauelement ausgeführt. Der erste Widerstand kann so dimensioniert werden, daß bei Nennspannung am ersten Versorgungspotentialanschluß und bei maximalem Lastrom durch den zweiten Halbleiterschalter die Nennspannung abfällt. So entsteht die Verlustwärme zum überwiegenden Teil in dem Widerstand, der sich außerhalb des integrierten Schaltkreises befindet. Eine starke Erwärmung der integrierten Schaltung wird somit verhindert. Im Idealfall kann der erste Widerstand bei Schaltvorgängen mit linearem Anstieg und keiner Wartezeit zwischen den Schaltvorgängen des ersten und des zweiten Halbleiterschalters ca. 75% der Schaltverluste übernehmen. Dies hat zur Folge, daß nur noch 25% der Verlustwärme von dem integrierten Schaltkreis bewältigt werden muß. Der Verlustwärmeanteil des Widerstandes kann sogar noch weiter vergrößert werden, wenn eine Wartezeit zwischen den Schaltvorgängen des ersten und des zweiten Halbleiterschalters vorgesehen ist. Der Vorteil dieser Ausgestaltung besteht darin, daß auf einfachste und sehr kostengünstige Weise die Verlustleistung in dem integrierten Schaltkreis gering gehalten werden kann.

In einer weiteren bevorzugten Ausgestaltung der Erfindung ist der Laststrecke des ersten Halbleiterschalters die Serienschaltung aus einem zweiten Ladungsspeicher, einer zweiten Diode und der Laststrecke des zweiten Halbleiterschalters parallel geschalten. Ferner ist ein zweiter Widerstand mit der Diode und der ersten Ausgangsklemme verbunden. Der zweite Ladungsspeicher ist bevorzugt als diskretes Bauelement ausgeführt, während der zweite Widerstand und die zweite Diode in dem integrierten Schaltkreis vorgesehen sein können. Diese Ausgestaltung ist insbesondere dann von Vorteil, wenn der Spannungsanstieg, d. h. der Schaltvorgang des ersten Halbleiterschalters wesentlich schneller gewählt wird als der Stromanstieg, der durch den zweiten Halbleiterschalter bedingt ist. Weiterhin ergibt sich der Vorteil, daß die insgesamt entstehende Verlustwärme sehr gering ist.

Die Ansteuerung weist vorteilhafterweise einen Taktgeber, einen Pulsweitenmodulator und eine Treiberanordnung für die Schaltvorrichtung auf.

Die Erfindung wird anhand der nachfolgenden Figuren näher erläutert. Gleiche Bezugszeichen bezeichnen dabei gleiche Elemente. Es zeigen:
- Figur 1: ein erstes Ausführungsbeispiel der erfindungsgemäßen Schaltungsanordnung,
- Figur 2: ein zweites Ausführungsbeispiel der erfindungsgemäßen Anordnung,
- Figur 3: ein drittes Ausführungsbeispiel der erfindungsgemäßen Schaltungsanordnung und
- Figur 4: die zeitlichen Spannungs-/Strom-Verläufe an den Halbleiterschaltern sowie die entstehende Verlustleistung.

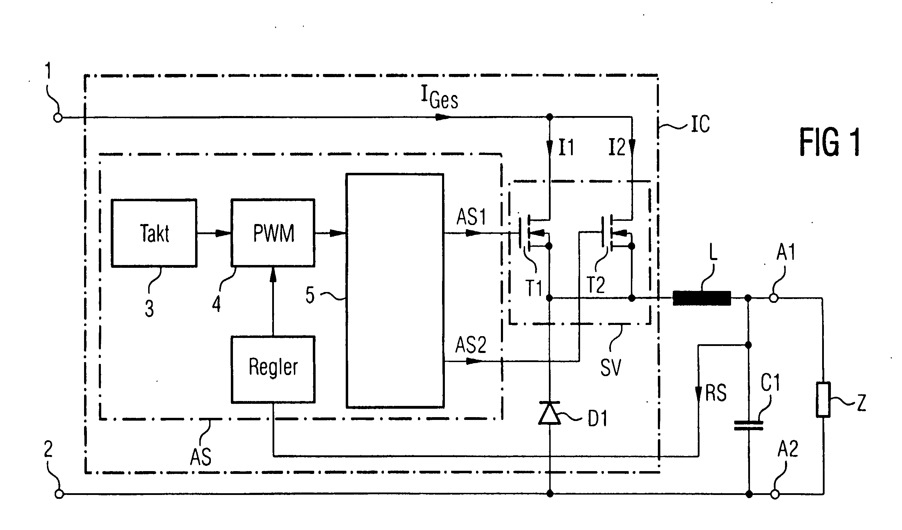

Figur 1 zeigt ein erstes Ausführungsbeispiel der erfindungsgemäßen Schaltungsanordnung für eine getaktete Stromversorgung. Die erfindungsgemäße Schaltungsanordnung weist einen integrierten Schaltkreis IC auf, der mit einem ersten Versorgungspotentialanschluß 1 und einem zweiten Versorgungspotentialanschluß 2 verbunden ist. Ferner ist in dem integrierten Schaltkreis IC eine Ansteuerschaltung AS vorgesehen, die eine Schaltvorrichtung SV ansteuert. Die Schaltvorrichtungs SV ist eingangsseitig mit dem ersten Versorgungspotentialanschluß 1 verbunden. Ausgangsseitig ist die Schaltvorrichtung SV über eine Spule mit einer ersten Ausgangsklemme A1 verbunden. Zwischen der ersten Ausgangsklemme A1 und einer zweiten Ausgangsklemme A2 ist eine Last Z vorgesehen. Der Last Z ist ein erster Ladungsspeicher C1 parallel geschalten. Die Spule L, der erste Ladungsspeicher C1 und die Last Z befinden sich außerhalb des integrierten Schaltkreises IC. Die erste Ausgangsklemme A1 ist über einen Rückkoppelzweig RS mit der Ansteuerschaltung AS verbunden. Die Ansteuerschaltung AS weist einen Taktgeber 3, einen Pulsweitenmodulator 4 sowie eine Treiberanordnung 5 auf. Die Treiberanordnung 5 erzeugt ein erstes Ansteuersignal AS1 und ein zweites Ansteuersignal AS2, die jeweils einem ersten Halbleiterschalter T1 bzw. einem zweiten Halbleiterschalter T2 der Steuervorrichtung SV zugeführt werden. In der vorliegenden Figur sind die erste und der zweite Halbleiterschalter T1, T2 als MOSFETs ausgeführt, es könnten jedoch statt dessen auch bipolare Transistoren bzw. andere beliebige steuerbare Schalter verwendet werden. Die MOSFETs T1, T2 sind mit ihren Drain-Source-Strecken parallel geschaltet, wobei die Drain-Anschlüsse jeweils mit dem ersten Versorgungspotentialanschluß verbunden sind. Am ersten Versorgungspotentialanschluß liegt die Betriebsspannung an, während am zweiten Versorgungspotentialanschluß ein Bezugspotential, z. B. Masse, anliegt. Die Sourceanschlüsse der MOSFETs T1, T2 sind mit dem ersten Anschluß der Spule L verbunden. Die MOSFETs T1, T2 sind so dimensioniert, daß bei gleicher Einsatzspannung, d. h. Gate-Source-Spannung der erste MOSFET T1 einen hohen Strom tragen kann, während der zweite MOSFET T2 einen wesentlich geringeren Strom trägt. Dies bedeutet nichts anderes, als das der MOSFET T1 eine wesentlich größere Anzahl an MOS-Zellen aufweist als der MOSFET T2. Zwischen den Source-Anschlüssen der MOSFETs T1, T2 und dem zweiten Versorgungspotentialanschluß ist eine erste Diode D1 vorgesehen, wobei der Anodenanschluß mit dem zweiten Versorgungspotentialanschluß 2 in Verbindung steht.

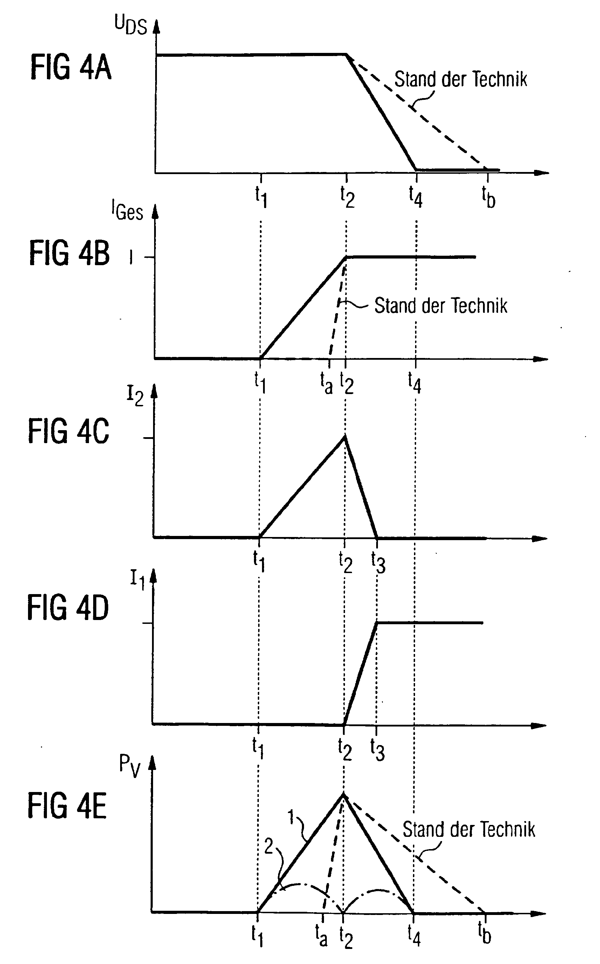

Das Funktionsprinzip der erfindungsgemäßen Schaltungsanordnung wird anhand der Figuren 4a bis 4e näher erläutert. Figur 4a zeigt die Drain-Source-Spannung der Halbleiterschalter T1 und T2, während Figur 4b den zugehörigen Gesamtstrom I_{Ges} darstellt. Die strichlierten Verläufe stellen dabei das Schaltverhalten einer Anordnung gemäß dem Stand der Technik dar. Zum Zeitpunkt tₐ wird nach dem Stand der Technik ein Halbleiterschalter eingeschalten. Zum Zeitpunkt t₂ ist der Gesamtstrom I_{Ges} auf seinen Nennstrom angestiegen. Die Stromanstiegsgeschwindigkeit ist relativ steil. Ab dem Zeitpunkt t₂ verbleibt der Strom auf seinem Nennstrom I_{N}. Andererseits sinkt zum Zeitpunkt t₂ die Drain-Source-Spannung U_{ds} bis zum Zeitpunkt t_{b} ab. Bedingt durch den steilen Stromanstieg und den relativ flachen Abfall der Drain-Source-Spannung wird eine hohe elektromagnetische Abstrahlung verursacht, die insbesondere beim Einsatz in Kraftfahrzeugen von Nachteil ist. In Figur 4e ist die zugehörige Verlustleistung strichliert dargestellt. Die Verlustleistung wird dabei durch die unter der strichlierten Linie dargestellte Fläche repräsentiert.

Gemäß der Erkenntnis der vorliegenden Erfindung ist es vorteilhaft, die Stromanstiegsgeschwindigkeit zu verkleinern, d. h. die Zeitdifferenz zwischen dem Einschalten und dem Erreichen des Nennstromes (t₂ - t₁) muß gegenüber dem Stand der Technik (t₂ - tₐ) vergrößert werden. Der flache Stromanstieg wird mittels des zweiten MOSFETs t₂ erzielt, wie dies in Figur 4c dargestellt ist. Beim Einschalten wird die Gate-Source-Spannung des zweiten MOSFETs T₂ mit einer definierten, wie in Figur 4c gezeigten, Flankensteilheit von einem Wert unterhalb der Einsatzspannung bis langsam auf seinen Maximalwert erhöht. Die geringere Flankensteilheit läßt sich bei einem MOSFET mit kleiner Fläche und kleiner Eingangskapazität leicht einstellen.

Zum Zeitpunkt t₂, wenn der zweite MOSFET T2 den gesamten Laststrom innen trägt, wird der erste MOSFET T1 mit einer hohen Stromanstiegsgeschwindigkeit eingeschalten, so daß er zum Zeitpunkt T₃ den gesamten Nennstrom trägt, während der MOSFET T2 bereits wieder sperrt. Die Addition der Ströme I1 und I2 ergibt den Gesamtstrom in Figur 4b. Werden die Halbleiterschalter T1 und T2 derart angesteuert, daß mit dem Beginn des Ausschaltens des zweiten MOSFETs der erste MOSFET T1 einschaltet und mit dem Erreichen des Zeitpunktes T₃ der zweite MOSFET T₂ sperrt, während der erste MOSFET T₁ den gesamten Laststrom übernimmt, so ergibt sich der in Figur 4b gezeigte rampenförmige Stromverlauf I_{Ges}. Der in den Figuren 4b bis 4d gezeigte Stromverlauf stellt den Idealfall dar. Es ist andererseits aber auch denkbar, den ersten MOSFET T1 bereits vor dem Zeitpunkt T₂ oder aber kurz danach einzuschalten, da dies weder signifikante Auswirkungen auf die elektromagnetische Verträglichkeit noch auf die erzeugte Verlustleistung hat. Die zugehörige Verlustleistungskennlinie ist in Figur 4e mit 1 bezeichnet.

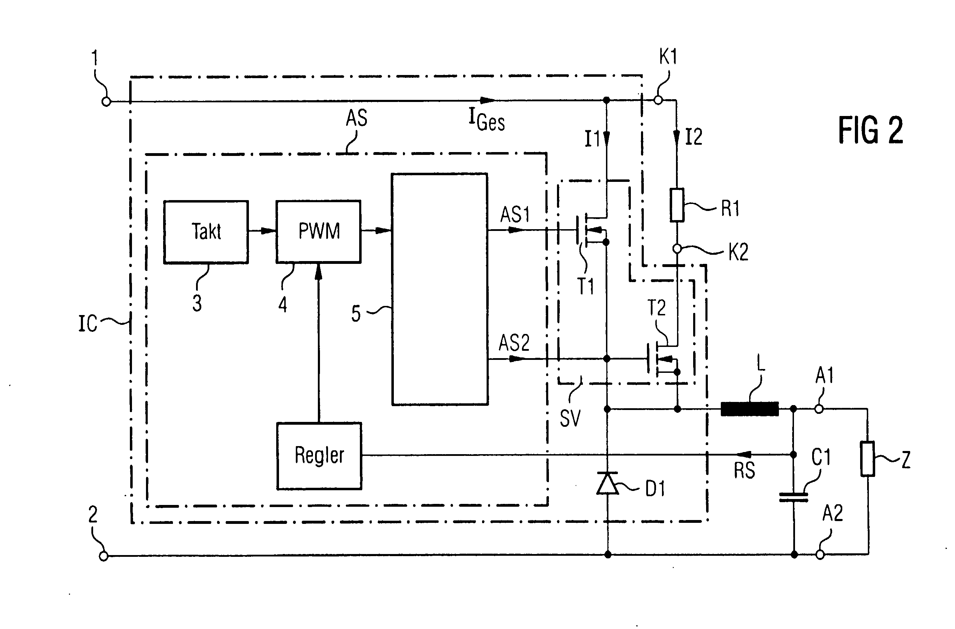

Figur 2 zeigt ein zweites Ausführungsbeispiel der erfindungsgemäßen Schaltungsanordnung. Gegenüber dem Ausführungsbeispiel aus Figur 1 unterscheidet sich diese bevorzugte Ausgestaltung nur dadurch, daß zwischen den Drain-Anschluß des zweiten MOSFETs T2 und den ersten Versorgungspotentialanschluß 1 ein erster Widerstand R1 verschalten ist. Dies bedeutet nichts anderes, als daß der Drain-Source-Laststrecke des ersten MOSFETs T1 die Reihenschaltung aus einem ersten Widerstand R1 und der Drain-Source-Strecke des zweiten MOSFETs T2 parallel geschalten ist. Der erste Widerstand R1 befindet sich dabei außerhalb des integrierten Schaltkreises IC. Durch diese Anordnung kann ein großer Teil der anfallenden Verlustleistung in dem ersten Widerstand R1 umgesetzt werden, so daß sich für die in dem integrierten Schaltkreis IC umgesetzte Verlustleistung der in Figur 4e strichpunktierte Verlauf 2 einstellt. Die Verlustleistungsfläche wird folglich nur noch durch zwei paraboloide Flächen dargestellt.

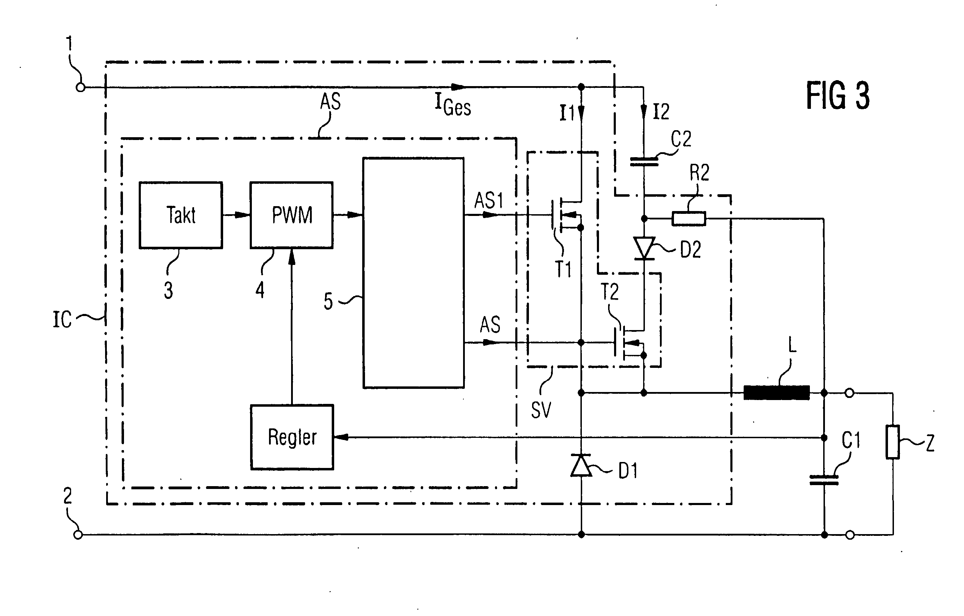

Figur 3 zeigt ein drittes, bevorzugtes Ausführungsbeispiel der erfindungsgemäßen Schaltungsanordnung. Der erste Widerstand R1 aus Figur 2 ist durch eine Serienschaltung aus einem zweiten Ladungsspeicher C2 und einer zweiten Diode D2 ersetzt. Dabei ist die Kathode der zweiten Diode D2 mit dem Drain-Anschluß des zweiten Halbleiterschalters T2 verbunden, während der Anodenanschluß mit dem zweiten Ladungsspeicher C2 verbunden ist. Der Verbindungspunkt zwischen dem Ladungsspeicher C2 und der zweiten Diode D2 ist mit dem ersten Anschluß eines Widerstandes R2 verbunden, dessen anderer Anschluß mit der ersten Ausgangsklemme A1 verbunden ist. Der zweite Ladungsspeicher C2 ist vorteilhafterweise außerhalb des integrierten Schaltkreises IC angeordnet, während der zweite Widerstand R2 und die zweite Diode D2 auf dem integrierten Schaltkreis IC integriert sein können.

Durch die beschriebene Verschaltung kann die Verlustleistung des zweiten Halbleiterschalters T2 weiter verringert werden. Der zweite Ladungsspeicher C2 ist auf die Differenzspannung zwischen dem ersten Versorgungspotentialanschluß 1 und der ersten Ausgangsklemme A1 aufgeladen. Bei ausgeschaltetem ersten Halbleiterschalter fällt an der Drain-Source-Strecke des zweiten Halbleiterschalters T2 in etwa die an der Ausgangsklemme AK1 anliegende Spannung ab, d. h. die entstehende Verlustleistung ist sehr klein. Während dieser Zeit fließt der Strom der Spule L langsam über die erste Diode D1 auf den ersten Ladungsspeicher C1. Wenn der erste Halbleiterschalter T1 ein- bzw. ausgeschaltet wird, geht der Strom sehr schnell vom zweiten Halbleiterschalter T2 auf den ersten Halbleiterschalter T1 über (bzw. umgekehrt).

Die Verschaltung hat den Vorteil, daß maximal ein externes Bauelement (Ladungsspeicher C2) benötigt. Dies hat zur Folge, daß die von der integrierten Schaltung und dem externen Ladungsspeicher C2 eingeschlossene Fläche sehr klein gehalten werden kann. Ferner ist die elektromagnetische Abstrahlung im dritten Ausführungsbeispiel auf ein absolutes Minimum reduziert. Das dritte Ausführungsbeipiel ist insbesondere dann von Vorteil, wenn der Spannungsanstieg, d. h. der Schaltvorgang des ersten Halbleiterschalters wesentlich schneller gewählt wird als der Stromanstieg, der durch den zweiten Halbleiterschalter bedingt ist. Somit wird die entstehende Verlustwärme noch einmal wesentlich reduziert.

### Bezugszeichenliste

- 1: erste Versorgungspotentialanschluß
- 2: zweiter Versorgungspotentialanschluß
- 3: Taktgeber
- 4: Pulsweitenmodulator
- 5: Treiberanordnung
- IC: integrierter Schaltkreis
- AS: Ansteuerschaltung
- AS1: erstes Ansteuersignal
- AS2: zweites Ansteuersignal
- SV: Schaltvorrichtung
- T1: erster HL-Schalter
- T2: zweiter HL-Schalter
- A1: erste Ausgangsklemme
- A2: zweite Ausgangsklemme
- Z: Last
- L: Spule
- D1: Diode
- D2: Diode
- C1: Ladungsspeicher
- C2: Ladungsspeicher
- R1: Widerstand
- R2: Widerstand
- I1: Strom
- I2: Strom
- I_{Ges}: Strom
- t₁..t₄: Zeitpunkt
- tₐ, t_{b}: Zeitpunkt
- RS: Rückkoppelzweig

## Patentansprüche

1. Schaltungsanordnung für eine getaktete Stromversorgung mit:
- einem integrierten Schaltkreis (IC), der mit einem ersten und einem zweiten Versorgungspotentialanschluß (1, 2) verbunden ist und der eine Schaltvorrichtung (SV), eine die Schaltvorrichtung (SV) steuernde Ansteuerschaltung (AS) und eine Diode (D1) aufweist,
- eine Spule (L), die mit der Schaltvorrichtung (SV) und einer ersten Ausgangsklemme (A1) verbunden ist,
- einer zwischen der ersten und einer zweiten Ausgangsklemme verschaltbaren Last (Z), der ein Ladungsspeicher (1) parallel geschaltet ist,
wobei die Schaltvorrichtung (SV) einen ersten und einen zweiten Halbleiterschalter (T1, T2) aufweist,
**dadurch gekennzeichnet,**
**daß** bei gleicher Einsatzspannung der erste Halbleiterschalter (T1) im Vergleich zum zweiten Halbleiterschalter (T2) einen größeren Strom tragen kann, und
**daß** der zweite Halbleiterschalter (T2) nach dem ersten Halbleiterschalter (T1) ausgeschaltet wird.

2. Schaltungsanordnung für eine getaktete Stromversorgung nach Anspruch 1,
**dadurch gekennzeichnet,**
**daß** der erste und der zweite Halbleiterschalter (T1, T2) mit ihren Laststrecken parallel geschalten sind und jeweils getrennt von der Ansteuerung angesteuert werden.

3. Schaltungsanordnung für eine getaktete Stromversorgung nach einem der Ansprüche 1 bis 2,
**dadurch gekennzeichnet,**
**daß** der zweite Halbleiterschalter (T2) vor dem ersten Halbleiterschalter (T1) eingeschaltet wird.

4. Schaltungsanordnung für eine getaktete Stromversorgung nach einem der Ansprüche 1 bis 3,
**dadurch gekennzeichnet,**
**daß** der Laststrecke des ersten Halbleiterschalters (T1) die Serienschaltung aus einem ersten Widerstand (R1) und der Laststrecke des zweiten Halbleiterschalters (T2) parallelgeschalten ist.

5. Schaltungsanordnung für eine getaktete Stromversorgung nach Anspruch 4,
**dadurch gekennzeichnet,**
**daß** an dem ersten Widerstand (R1) bei maximalem Laststrom durch den zweiten Halbleiterschalter (T2) die Nennspannung abfällt.

6. Schaltungsanordnung für eine getaktete Stromversorgung nach Anspruch 4 oder 5,
**dadurch gekennzeichnet,**
**daß** der erste Widerstand als diskretes Bauelement ausgeführt ist.

7. Schaltungsanordnung für eine getaktete Stromversorgung nach einem der Ansprüche 1 bis 3,
**dadurch gekennzeichnet,**
**daß** der Laststrecke des ersten Halbleiterschalters (T1) die Serienschaltung aus einem zweiten Ladungsspeicher (C2), eine zweite Diode (D2) und der Laststrecke des zweiten Halbleiterschalters (T2) parallelgeschalten ist und daß ein zweiter Widerstand mit der Diode (D2) und der ersten Ausgangsklemme (A1) verbunden ist.

8. Schaltungsanordnung für eine getaktete Stromversorgung nach Anspruch 7,
**dadurch gekennzeichnet,**
**daß** der zweite Ladungsspeicher (C2) als diskretes Bauelement ausgeführt ist.

9. Schaltungsanordnung für eine getaktete Stromversorgung nach einem der Ansprüche 1 bis 8,
**dadurch gekennzeichnet,**
**daß** die Ansteuerschaltung (AS) einen Taktgeber (3), einen Pulsweitenmodulator (4) und eine Treiberanordnung (5) enthält.

10. Schaltungsanordnung für eine getaktete Stromversorgung nach einem der Ansprüche 1 bis 9,
**dadurch gekennzeichnet,**
**daß** die Ansteuerschaltung (AS) dazu ausgebildet ist, zum Einschalten des zweiten Halbleiterschalters (T2) dessen Gate-Source-Spannung mit einer definierten Flankensteilheit von einem Wert unterhalb einer Einsatzspannung des zweiten Halbleiterschalters (T2) bis zu einem Maximalwert der Einsatzspannung zu erhöhen.

## Claims

1. A circuit arrangement for a clocked power supply comprising:
- an integrated circuit (IC) connected to a first and a second supply potential terminal (1, 2) and having a switching mechanism (SV), a control circuit (AS) that controls the switching mechanism (SV), and a diode (D1);
- a coil (L) connected to the switching mechanism (SV) and a first output terminal (A1);
- a load (Z) that is connectable between the first and a second output terminal and that is connected in parallel with a charge storage unit (1),
whereby the switching mechanism (SV) comprises a first and a second semiconductor switch (T1, T2), **characterized in that**,
at the same threshold voltage level, the first semiconductor switch (T1) can conduct a higher current than the second semiconductor switch (T2) and
**in that** the second semiconductor switch (T2) is turned off after the first semiconductor switch (T2).

2. Circuit arrangement for a clocked power supply of claim 1,
**characterized in that**
the first and second semiconductor switches (T1, T2) with their load paths are connected in parallel, and each is separately controlled by the control circuit.

3. Circuit arrangement for a clocked power supply of any of claims 1 - 2,
**characterized in that**
the second semiconductor switch (T1) is turned on before the first semiconductor switch (T2).

4. Circuit arrangement for a clocked power supply of any of claims 1 - 3,
**characterized in that**
the load path of the first semiconductor switch (T1), the series connection from a first resistor (R1) and the load path of the second semiconductor switch (T2) are connected in parallel.

5. Circuit arrangement for a clocked power supply of claim 4,
**characterized in that**
the nominal voltage drops across the first resistor (R1), when a maximum load current flows through the second semiconductor switch (T2).

6. Circuit arrangement for a clocked power supply of claim 4 or 5,
**characterized in that**
the first resistor is a discrete component.

7. Circuit arrangement for a clocked power supply of any of claims 1 - 3,
**characterized in that**
the load path of the first semiconductor switch (T1), the series connection from a second charge storage unit (C2), a second diode (D2) and the load path of the second semiconductor switch (T2) are connected in parallel and that a second resistor is connected with the diode (D2) and the first output terminal (A1).

8. Circuit arrangement for a clocked power supply of claim 7,
**characterized in that**
the second charge storage unit (C2) is a discrete component.

9. Circuit arrangement for a timed power supply of any of claims 1 - 8,
**characterized in that**
the control circuit (AS) comprises a clock generator (3), a pulse width modulator (4) and a driver arrangement (5).

10. Circuit arrangement for a clocked power supply of any of claims 1 - 8,
**characterized in that**
the control circuit (AS) is configured to turn on the second semiconductor switch (T2), by raising its gate-source voltage along a defined slope steepness from a value below the threshold voltage of the second semiconductor switch (T2) up to a maximum value of the threshold voltage.

## Revendications

1. Montage pour une alimentation en courant cadencée comprenant
- un circuit (IC) intégré qui est relié à une première et à une deuxième bornes (1, 2) de potentiel d'alimentation et qui a un dispositif (SV) de commutation, un circuit (AS) de commande commandant le dispositif (SV) de commutation et une diode (D1),
- une bobine (L) qui est reliée au dispositif (SV) de commutation et à une première borne (A1) de sortie,
- une charge (Z) qui peut être montée entre la première et une deuxième bornes de sortie, avec laquelle un accumulateur (1) de charge est monté en parallèle,
dans lequel le dispositif (SV) de commutation a un premier et un deuxième commutateur (T1, T2) à semi-conducteur, **caractérisé en ce que**
pour une même tension de blocage, le premier commutateur (1) à semi-conducteur peut porter un courant plus grand que le deuxième commutateur (T2) à semi-conducteur et
**en ce que** le deuxième commutateur à semi-conducteur se bloque après le premier commutateur (T1) à semi-conducteur.

2. Montage pour une alimentation au courant cadencée suivant la revendication 1,
**caractérisé en ce que**
le premier et le deuxième commutateurs (T1, T2) à semi-conducteur sont montés en parallèle par leur section de charge et sont commandés respectivement séparément par la commande.

3. Montage pour une alimentation au courant cadencée suivant l'une des revendications 1 à 2,
**caractérisé en ce que**
le deuxième commutateur (T2) à semi-conducteur devient passant avant le premier commutateur (T1) à semi-conducteur.

4. Montage pour une alimentation au courant cadencée suivant l'une des revendications 1 à 3,
**caractérisé en ce que**
le circuit série, composé d'une première résistance et de la section de charge du deuxième commutateur (T2) à semi-conducteur, est monté en parallèle à la section de charge du premier commutateur (T1) à semi-conducteur.

5. Montage pour une alimentation au courant cadencée suivant la revendication 4,
**caractérisé en ce que**
la tension nominale chute sur la première résistance (R1) au courant de charge maximum passant dans le deuxième commutateur (T2) à semi-conducteur.

6. Montage pour une alimentation au courant cadencée suivant la revendication 4 ou 5,
**caractérisé en ce que**
la première résistance est réalisée sous la forme d'un composant discret.

7. Montage pour une alimentation au courant cadencée suivant l'une des revendications 1 à 3,
**caractérisé en ce que**
le circuit série, composé d'un deuxième accumulateur (C2) de charge, d'une deuxième diode (D2) et de la section de charge du deuxième commutateur (T2) à semi-conducteur, est monté en parallèle à la section de charge du commutateur (T1) à semi-conducteur et **en ce qu'**une deuxième résistance est reliée à la diode (D2) et à la première borne (A1) de sortie.

8. Montage pour une alimentation au courant cadencé suivant la revendication 7,
**caractérisé en ce que**
le deuxième accumulateur (C2) de charge est réalisé sous la forme d'un composant discret.

9. Montage pour une alimentation au courant cadencé suivant l'une des revendications 1 à 8,
**caractérisé en ce que**
le circuit (AS) de commande comporte un donneur (3) de cadence, un modulateur (4) de largeur d'impulsion et un agencement (5) d'attaque.

10. Montage pour une alimentation au courant cadencé suivant l'une des revendications 1 à 9,
**caractérisé en ce que**
le circuit (AS) de commande est constitué pour mettre à l'état passant le deuxième commutateur (T2) à semi-conducteur, dont la tension grille-source est, avec une pente de front définie augmentée d'une valeur en dessous d'une tension de blocage du deuxième commutateur (T2) à semi-conducteur jusqu'à une valeur maximum de la tension de blocage.
